# EUROPÄISCHE PATENTSCHRIFT

(11) **EP 2 183 541 B1**
(45) Veröffentlichungstag und Bekanntmachung des Hinweises auf die Patenterteilung: **18.03.2015**
(21) Anmeldenummer: 08801679.5
(22) Anmeldetag: 23.08.2008
(51) Int. Cl.: F41A 27/30, G01M 1/36

(54) **LÄNGEN- UND KRAFTAUSGLEICHER**
LENGTH AND FORCE COMPENSATION DEVICE
DISPOSITIF DE COMPENSATION DE LONGUEUR ET DE FORCE

(30) Priorität: 31.08.2007 DE 102007041293
(43) Veröffentlichungstag der Anmeldung: 12.05.2010
(73) Patentinhaber: Rheinmetall Landsysteme GmbH, 29345 Unterlüß (DE)
(72) Erfinder: SAULE, Hans, 86465 Welden (DE); DILLER, Armin, 86179 Augsburg (DE); KRAUS, Jochen, 86157 Augsburg (DE)
(74) Vertreter: Dietrich, Barbara
(86) Internationale Anmeldenummer: PCT/EP2008/006942
(87) Internationale Veröffentlichungsnummer: WO 2009/030386

(56) Entgegenhaltungen:
- FR-A- 594 559
- GB-A- 119 043
- GB-A- 603 977
- GB-A- 2 433 107

## Beschreibung

Die Erfindung betrifft einen Längen- und Kraftausgleicher für eine höhenrichtbare Masse. Die höhenrichtbaren Massen sind dabei die Wiege, die Waffe, eventuell eine Sekundärwaffe, mit Waffenrohr und ein Gurtzuführer sowie eine Waffenaufnahme. Das Richten erfolgt um ein Höhendrehlager, um das sich die Massen drehen. Am Drehlager ist der Höhenrichtantrieb angebracht. Der Schwerpunkt der höhenrichtbaren Massen liegt jedoch vor dem Drehlager und damit vor dem Antrieb. Um beim Richten dieser Massen in der Höhe kleinere Antriebe verwenden zu können, wird das Höhenrichten mit Unterstützung einer Federkraft oder dergleichen durchgeführt. Dazu wird ein Seil um das Drehlager gelegt, welches durch die Feder gezogen wird.

Derartige Federn weisen wie auch hydraulische Lösungen ein lineares Verhalten auf. Das Antriebsmoment zum Richten selbst ist nicht linear, da der Schwerpunkt in Richtung Drehlager wandert, was zu einer veränderlichen Unbalance beim Richten führt, die mit zunehmender Höhe geringer wird. Diese Unwucht bewirkt eine nicht tangentiale Kraft auf das Seil, was durch eine große Feder aufgefangen werden muss. Nachteilig bei diesen bekannten Lösungen ist, dass sie daher einen großen Bauraum benötigen.

Eine Richteinheit mit zwei Umlenkrollen für eine Waffe offenbart die GB 119,043 A. Jede Umlenkrolle wirkt jeweils mit einem Achsbolzen zusammen, an denen Rollen befestigt sind, die von flexiblen Gummiringen umwickelt sind. Die Konstruktion ist dabei unterhalb einer Schwenkachse der Waffe und parallel zur Schwenkachse ausgerichtet eingebunden.

Der Erfindung stellt sich die Aufgabe, eine Möglichkeit aufzuzeigen, die einen optimalen Längen- und Kraftausgleich bei geringerem Bauraum ermöglicht.

Gelöst wird die Aufgabe durch die Merkmale des Patentanspruchs 1 und der Merkmale des Patentanspruchs 2.

Der Erfindung liegt die Idee zugrunde, einen Längen- und Kraftausgleich durch Einbinden nichtlinear wirkender / arbeitender Mittel vorzunehmen, um so bei Nutzung eines linearen Kraftsystems die beim Richten auftretende Unwucht trotzdem aufnehmen zu können.

Dies kann in einer einfachen Form beispielsweise eine Feder sowie feststehende Umlenkrollen oder dergleichen sowie ein beide umschlingendes bzw. umlaufendes Seil, vorzugsweise jedoch eine Kette, sein. Der Längen- als auch der Kraftausgleich erfolgt hierbei alleinig durch die Feder. Ein derartiger Ansatz ist jedoch bereits aus der GB 119,043 A bekannt.

Als eine sehr gute Ausführung in der Praxis hat sich erfindungsgemäß jedoch das Einbinden eines Hebels (Schwinge) und eines damit zusammenwirkenden Kurvensegmentes am Höhenrichter gezeigt. Die untere Umlenkrolle ist dabei nicht mehr turmfest sondern an der Schwinge angebracht. Der Längenausgleich erfolgt über den Hebel sowie die Kurve, der Kraftausgleich über die Feder bzw. Federrate. Beim Drehen der Massen am Höhenrichter drückt die Sichel am Höhenrichter die Schwinge weg, so dass ein Längenausgleich durch das Seil / Kette übernommen wird. Der Längenausgleich erfolgt somit über die Schwinge sowie die Kurve, der Kraftausgleich über die Feder bzw. Federrate.

In einer weiteren vorteilhaften erfindungsgemäßen Ausführung ist des Weiteren eine Art Flaschenzug an der Schwinge vorgesehen. Die obere und die mittlere Rolle stehen fest im Raum, die zweite und die vierte Rolle sind an der Schwinge angebracht und setzen das Flaschenzugprinzip um.

Anhand eines Ausführungsbeispiels mit Zeichnung soll die Erfindung näher erläutert werden. Es zeigt:
- Fig. 1: eine Variante eines Längen- und Kraftausgleichers für höhenrichtbare Massen nach dem Stand der Technik,
- Fig. 2: eine zweite Variante des Längen- und Kraftausgleichers,
- Fig. 3: eine weitere Variante des Längen- und Kraftausgleichers.

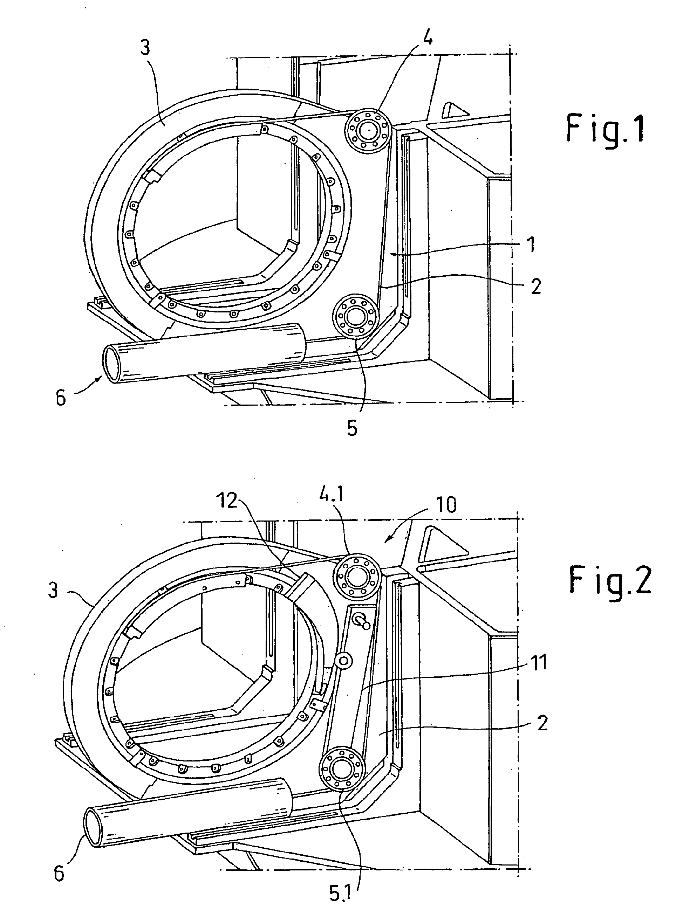

Fig. 1 zeigt eine bekannte Variante eines nichtlinearen Längen- und Kraftausgleichers 1. Dabei ist eine Kette 2, alternativ ein Seil, einerseits am Drehlager 3 befestigt, um zwei Umlenkrollen 4, 5 geführt und andererseits mit einer Feder 6 verbunden. Beide Umlenkrollen 4, 5 sind turmfest. Der Längen- als auch Kraftausgleich erfolgt über die Feder 6, die Umlenkrollen 4, 5 fangen ein Teil der Unwucht auf.

Fig. 2 zeigt eine weitere Variante eines nichtlinearen Längen- und Kraftausgleichers 10. Die Kette 2 ist auch hier einerseits am Drehlager 3 befestigt und andererseits mit der Feder 6 verbunden. Zwischen den Umlenkrollen 4.1, 5.1 eingebunden ist ein Hebel 11, welcher mit einem Kurvensegment 12 am Drehlager 3 funktional zusammenwirkt. Am Hebel 11 fest angebracht ist die untere Umlenkrolle 5.1. Der Kraftausgleich erfolgt durch die Feder 6, der Längenausgleich über Hebel 11 und Kurvensegment 12. Wenn das Drehlager 3 gedreht wird, greift das Kurvensegment 12 an den Hebel 11 an und drückt diesen weg, d. h., der Hebel 11 bzw. die Schwinge wird bedingt durch den und entlang des Kurvenradius bewegt. Da die obere Umlenkrolle 4.1 turmfest ist, wird die untere Umlenkrolle 5.1 dadurch zur Feder 6 verstellt, die bekannte Unwucht voll durch den Längenausgleich aufgenommen. Der Schwenkbereich des Hebels 11 kann hier bei 26° liegen.

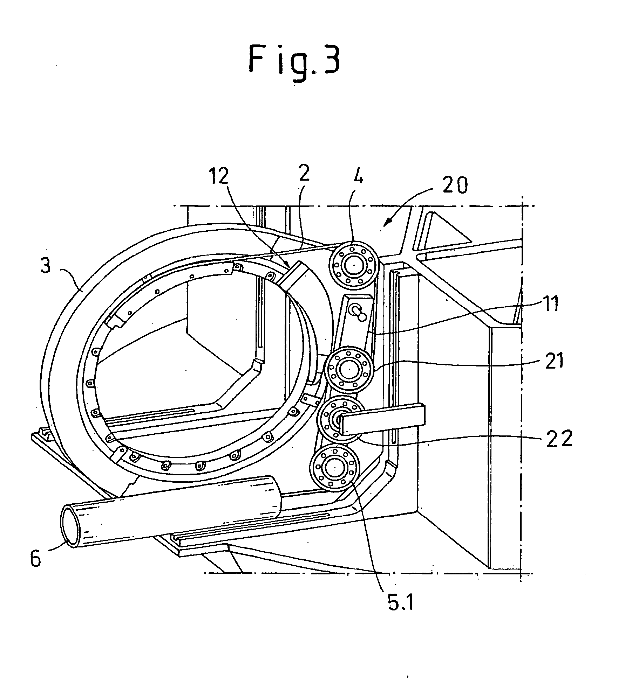

Die bevorzugte Variante wird in Fig. 3 dargestellt. Zusätzlich zum Hebel 11 in Fig. 2 (Längen- und Kraftausgleicher 10) sind zwei weitere Umlenkrollen 21, 22 vorgesehen. Die obere und mittlere Umlenkrolle 4, 22 sind fest im Raum gelagert, die beiden anderen 5.1, 21 auf dem Hebel 11. Der hier dargestellte Längen- und Kraftausgleicher 20 benötigt durch die eingebundene flaschenzugartige Wirkung der Umlenkrollen 4, 5.1, 21, 22 weniger Bauraum, da der Schwenkbereich des Hebels 11 nunmehr nur noch bei 13° liegen braucht.

## Patentansprüche

1. Längen- und Kraftausgleicher (10) für eine höhenrichtbare Masse einer Waffenanlage, die über ein Drehlager (3) in Höhe gerichtet wird, wobei der Längen- und Kraftausgleicher (1) Mittel zur Korrektur einer beim Richten auftretenden Unwucht aufweist, wie eine Kette (2), Seil oder dergleichen, welches einerseits am Drehlager (3) befestigt, um wenigstens zwei Umlenkrollen (4.1, 5.1) geführt und andererseits mit einer Feder (6) verbunden ist, wobei zwischen den Umlenkrollen (4.1, 5.1) ein Hebel (11) eingebunden ist, welcher mit einem Kurvensegment (12) am Drehlager (3) funktional zusammenwirkt und die untere Umlenkrolle (5.1) fest am Hebel (11) angebracht ist, während die obere Umlenkrolle (4.1) turmfest ist.

2. Längen- und Kraftausgleicher (20) für eine höhenrichtbare Masse einer Waffenanlage, die über ein Drehlager (3) in Höhe gerichtet wird, wobei der Längen- und Kraftausgleicher (1) Mittel zur Korrektur einer beim Richten auftretenden Unwucht aufweist, wie eine Kette (2), Seil oder dergleichen, welche einerseits am Drehlager (3) befestigt, um wenigstens zwei Umlenkrollen (4, 5.1, 21, 22) geführt und andererseits mit einer Feder (6) verbunden ist, wobei zwischen den Umlenkrollen (4, 5.1) ein Hebel (11) eingebunden ist, welcher mit einem Kurvensegment (12) am Drehlager (3) funktional zusammenwirkt, wobei zwei weitere Umlenkrollen (21, 22) eingebunden sind, um die die Kette (2) zusätzlich geführt wird und die obere sowie die mittlere Umlenkrolle (4, 22) sind fest im Raum, die beiden anderen Umlenkrollen (5, 21) auf dem Hebel (11) gelagert sind.

## Claims

1. Length and force compensation device (10) for a height-adjustable mass of a weapons system, which is adjusted in height by way of a rotary bearing (3), wherein the length and force compensation device (1) has means for correcting an imbalance during the adjustment, such as a chain (2), a cable or the like, which on one side is fastened to the rotary bearing (3), is led around at least two deflecting rollers (4.1, 5.1) and on the other side is connected to a spring (6), wherein a lever (11), which functionally interacts with a cam segment (12) on the rotary bearing (3), is integrated between the deflecting rollers (4.1, 5.1), and the lower deflecting roller (5.1) is fixedly attached to the lever (11), while the upper deflecting roller (4.1) is fixed to the turret.

2. Length and force compensation device (20) for a height-adjustable mass of a weapons system, which is adjusted in height by way of a rotary bearing (3), wherein the length and force compensation device (1) has means for correcting an imbalance during the adjustment, such as a chain (2), a cable or the like, which on one side is fastened to the rotary bearing (3), is led around at least two deflecting rollers (4, 5.1, 21, 22) and on the other side is connected to a spring (6), wherein a lever (11), which functionally interacts with a cam segment (12) on the rotary bearing (3), is integrated between the deflecting rollers (4, 5.1), wherein two further deflecting rollers (21, 22) are integrated, around which the chain (2) is additionally led, and the upper and the middle deflecting rollers (4, 22) are spatially fixed, the two other deflecting rollers (5, 21) are mounted on the lever (11).

## Revendications

1. Dispositif de compensation de longueur et de force (10) pour une masse à pointer en hauteur d'un poste de tir, qui est pointé en hauteur au moyen d'un palier rotatif (3), dans lequel le dispositif de compensation de longueur et de force (1) présente un moyen pour la correction d'un déséquilibre apparaissant lors du pointage, comme une chaîne (2), un câble ou analogue, qui est d'une part fixé au palier rotatif (3) et guidé autour d'au moins deux rouleaux de déviation (4.1, 5.1) et qui est d'autre part relié à un ressort (6), dans lequel un levier (11) est intercalé entre les rouleaux de déviation (4.1, 5.1), lequel coopère au niveau fonctionnel avec un segment de came (12) sur le palier rotatif (3) et le rouleau de déviation inférieur (5.1) est monté de façon stationnaire sur le levier (11) tandis que le rouleau de déviation supérieur (4.1) est monté de façon stationnaire sur le bâti.

2. Dispositif de compensation de longueur et de force (20) pour une masse à pointer en hauteur d'un poste de tir, qui est pointé en hauteur au moyen d'un palier rotatif (3), dans lequel le dispositif de compensation de longueur et de force (1) présente un moyen pour la correction d'un déséquilibre apparaissant lors du pointage, comme une chaîne (2), un câble ou analogue, qui est d'une part fixé au palier rotatif (3) et guidé autour d'au moins deux rouleaux de déviation (4, 5.1, 21, 22) et qui est d'autre part relié à un ressort (6), dans lequel un levier (11) est intercalé entre les rouleaux de déviation (4, 5.1), lequel coopère au niveau fonctionnel avec un segment de came (12) sur la palier rotatif (3), dans lequel deux autres rouleaux de déviation (21, 22) sont intercalés, autour desquels la chaîne (2) est en plus guidée et les rouleaux de déviation supérieur et moyen (4, 22) sont stationnaires dans l'espace, et les deux autres rouleaux de déviation (5, 21) sont montés sur le levier (11).
